# FASCICULE DE BREVET EUROPEEN

(11) **EP 1 526 038 B1**
(45) Date de publication et mention de la délivrance du brevet: **09.01.2008**
(21) Numéro de dépôt: 03292622.2
(22) Date de dépôt: 21.10.2003
(51) Int. Cl.: B60Q 1/14, B60Q 1/08, F21V 5/00, F21V 9/04

(54) **Dispositif projecteur bifonction pour véhicule automobile.**
Doppelfunktionsscheinwerfereinrichtung für Kfz
Dual-function headlamp device for vehicle

(43) Date de publication de la demande: 27.04.2005
(73) Titulaire: VALEO VISION, 93012 Bobigny Cédex (FR)
(72) Inventeur: Albou, Pierre, 75013 Paris (FR); Leleve, Joël, 93800 Epinay sur Seine (FR)
(74) Mandataire: Renous Chan, Véronique

(56) Documents cités:
- EP-A- 0 479 634
- EP-A- 1 160 506
- DE-A- 19 526 023
- FR-A- 2 839 138
- US-A1- 2001 019 482
- PATENT ABSTRACTS OF JAPAN vol. 2000, no. 15, 6 avril 2001 (2001-04-06) -& JP 2000 348513 A (STANLEY ELECTRIC CO LTD), 15 décembre 2000 (2000-12-15)

## Description

La présente invention a pour objet un dispositif projecteur bifonction pour véhicule automobile. Elle a pour but essentiel de permettre à un automobiliste de disposer, à partir d'une unique source lumineuse, d'un premier faisceau lumineux et d'un deuxième faisceau lumineux différents dans leur zone de diffusion, le premier faisceau lumineux étant essentiellement constitué de lumière visible, et le deuxième faisceau lumineux étant constitué de lumière non visible, c'est à dire d'ondes lumineuses de longueurs d'ondes situées hors du spectre visible.

Le domaine de l'invention est, d'une façon générale, celui des projecteurs de véhicule automobile. Dans ce domaine, on connaît différents types de projecteurs, parmi lesquels on trouve notamment :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée ou feu anti-brouillard, dont la zone de vision sur la route avoisine 200 mètres, et qui doivent être éteints lorsque l'on croise un autre véhicule afin de ne pas éblouir son conducteur.

Par ailleurs, on connaît certains projecteurs perfectionnés, appelés projecteurs bimode, qui cumulent les fonctions de feux de croisement et de feux longue portée : à cet effet, on dispose à l'intérieur du projecteur bimode un cache, constitué par exemple d'une plaque métallique, amovible pouvant passer sur commande d'une première position dans laquelle il n'occulte pas le signal lumineux produit par la source lumineuse du projecteur, la portée du projecteur correspondant alors à celle des feux de route, à une deuxième position dans laquelle il occulte une partie du signal lumineux produit par la source lumineuse du projecteur, la portée du projecteur étant ainsi limitée à celle des feux de croisement.

Le dispositif selon l'invention peut être mis en place dans l'un quelconque des types de projecteurs qui viennent d'être mentionnés. Sa mise en place sera plus particulièrement détaillée, à titre d'exemple uniquement, avec les feux longue portée.

On connaît également dans l'état de la technique, des dispositifs d'éclairage, appelés projecteurs bifonctions, ce terme désignant un projecteur présentant de préférence au moins une fonctionnalité dans le visible et au moins une fonctionnalité hors domaine visible, qui permettent de maintenir une zone de vision étendue sans éblouir le chauffeur d'un véhicule croisé. De tels dispositifs répondent au problème selon lequel les feux longue portée doivent impérativement être éteints pour laisser place aux seuls feux de croisement lorsqu'un véhicule est croisé afin de ne pas éblouir le conducteur de ce véhicule, limitant ainsi considérablement la zone de vision au risque de ne plus éclairer suffisamment tôt d'éventuels obstacles.

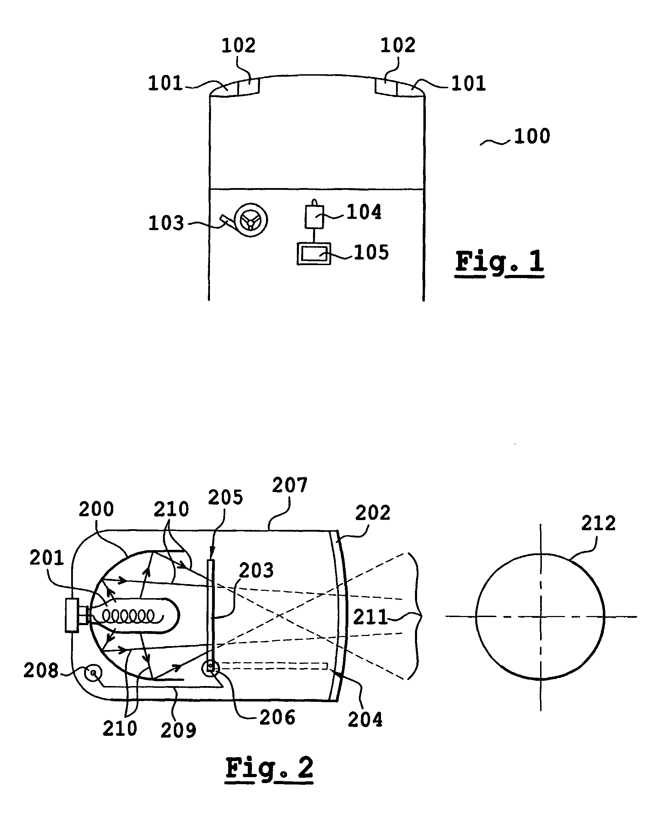

En réponse à ce problème, il a été proposé un dispositif tel que représenté à la figure 2, ce dispositif étant destiné à équiper des véhicules du type de celui illustré à la figure 1.

La figure 1 montre une vue de dessus de la partie avant 100 d'un véhicule qui comporte des feux de croisement 101, des feux de route 102, et dans l'habitacle du véhicule, une commande 103 permettant l'allumage des feux de croisement ou des feux de position, et une caméra vidéo 104 reliée électriquement notamment à un écran de visualisation 105.

La figure 2 est une vue en coupe et de dessus d'un feu de route 102 amélioré. Chaque feu de route comporte essentiellement un réflecteur 200, une source de lumière 201, émettant des signaux lumineux 210, disposée au voisinage du sommet du réflecteur 200, et une surface de sortie 202 du faisceau lumineux. La surface de sortie 202 peut être soit une glace de type plastique, soit une lentille appropriée, dite lentille de sortie, pour obtenir un faisceau lumineux satisfaisant les exigences des différentes normes. On définit par faisceau lumineux l'ensemble des rayons lumineux qui sont effectivement émis par un projecteur au niveau de la surface de sortie 202, le volume éclairé par le faisceau lumineux correspondant à la zone de vision du conducteur ; par signaux lumineux, on désigne l'ensemble des rayons lumineux émis par la source de lumière 201. Dans l'état de la technique comme dans le dispositif selon l'invention, les signaux lumineux 210 sont émis soit directement vers la surface de sortie 202, soit indirectement après avoir subi d'éventuelles déviations et/ou réflexions.

Un feu de route amélioré tel que celui représenté comporte par ailleurs un filtre infra-rouge 203, c'est à dire un filtre laissant passer uniquement les signaux lumineux dont la longueur d'onde appartient au spectre infra-rouge. Le filtre 203 est amovible, c'est à dire qu'il peut évoluer entre une première position 204, dite position passive, approximativement horizontale sur la figure, représentée en traits pointillés, et une deuxième position 205, dite position active, approximativement verticale, représentée en traits pleins. Chaque filtre 203 peut être constitué par une plaque de forme rectangulaire ou circulaire susceptible de pivoter autour d'un axe de rotation 206 solidaire d'un boîtier 207 dans lequel est monté le feu de route 102. Le pivotement du filtre 203 peut par exemple être commandé par un actionneur électrique 208 qui peut entraîner un système de tringlerie 209 pour faire pivoter le filtre 203. Dans d'autres modes de réalisation, on peut prévoir, par exemple, que le filtre amovible 203 est constitué par une douille associée par exemple à un système de déplacement mécanique de telle sorte que la douille puisse venir entourer la source de lumière 201.

Dans la première position, aucun des signaux lumineux émis par la source lumineuse 201 ne traverse le filtre 203, si bien que la lumière visible permet d'éclairer la route. Dans la deuxième position, la majorité des signaux lumineux émis par la source lumineuse 201 traverse le filtre 203, si bien que seuls les signaux infra-rouges constituent le faisceau lumineux de sortie. Certains signaux lumineux 210 émis par la source lumineuse 201 peuvent cependant ne pas traverser le filtre 203 même quand ce dernier est dans la deuxième position, notamment dans le cas où il existe un trou dans le réflecteur 200 pour permettre la fixation de la source lumineuse 201. Dans les deux positions, on obtient un faisceau lumineux identique 211. Un tel faisceau projeté sur un mur donnerait approximativement une tâche lumineuse circulaire 212.

Dans ces dispositifs de l'état de la technique, on prévoit que, lorsque le conducteur a activé ses feux de route et qu'il décide de passer au moyen de la commande 103 en feux de croisement, les feux de route ne sont pas éteints, mais le filtre 203 est mis dans sa position active. La caméra vidéo 104, sensible aux rayons infra-rouge, permet d'obtenir une image sur l'écran de contrôle 105, cette image correspondant à la zone de vision qu'il avait au moyen des feux de route. Par ailleurs, la lumière visible étant filtrée, le conducteur d'un véhicule croisé ne sera pas ébloui.

Cependant, dans les dispositifs projecteurs améliorés de l'état de la technique, le faisceau lumineux 211 obtenu par un éclairage direct en lumière visible, ou par un éclairage en lumière non visible, dit éclairage indirect, reste le même. Or dans certains cas, il peut être utile au conducteur de disposer, avec un éclairage indirect, d'un faisceau lumineux différent de celui obtenu avec un éclairage direct. Dans l'exemple décrit précédemment, il peut être intéressant d'obtenir un éclairage indirect élargi horizontalement car cela est avantageux pour le confort de conduite et l'appréciation des virages. Le faisceau lumineux est ainsi rendu moins directif. Un autre exemple est celui des feux de position arrière, qui peuvent être équipés d'un projecteur amélioré du type de celui décrit à la figure 2, le réflecteur 200 et la source lumineuse 201 étant remplacés par des éléments correspondant adaptés aux feux de position arrière, et pour lesquels on peut avoir besoin d'un faisceau lumineux différent en éclairage direct et indirect.

Il est également connu de DE 195 26 023 un dispositif projecteur selon le préambule de la revendication 1 utilisant une source de lumière, un réflecteur principal, plusieurs réflecteurs additionnels, un filtre pour filtrer une partie des rayonnements dans le visible émis par la source de lumière, et deux lentilles.

Il est connu de EP 1 160 506 un module optique utilisant un filtre apte à filtrer les rayonnements visibles d'une partie seulement des rayons émis par la source.

Il est connu de US2001/019482 un module optique apte à mettre simultanément avec la même source des rayonnements infra-rouges et visibles.

Il est connu de JP 2000-348513 un module optique muni d'un filtre aux rayons visibles également.

Il est enfin connu de EP 479 634 un module optique longue portée utilisant également un filtre vis-à-vis des rayonnements visibles affectant tout le rayonnement émis par la source lumineuse en position active.

D'une façon générale, le dispositif selon l'invention propose une solution pour qu'un ou plusieurs projecteurs de véhicule puisse définir deux faisceaux lumineux, et donc deux zones de vision différentes : une première zone de vision correspond à une étendue, à un volume, directement visible par le conducteur au moyen d'un éclairage avec de la lumière visible ; une deuxième zone de vision correspond à une étendue reconstituée sur un écran de contrôle à partir d'une image de l'étendue considérée éclairée au moyen d'un éclairage sans lumière visible. La deuxième zone de vision peut être obtenue lorsque le conducteur ne souhaite plus utiliser la lumière visible des feux dans lesquels est installé le dispositif selon l'invention. Ainsi, dans l'invention, c'est la même source lumineuse qui permet d'obtenir deux zones de vision différentes.

Pour atteindre cet objectif, on a prévu, dans l'invention, l'utilisation d'une lentille, désignée par la suite comme lentille intermédiaire. Cette lentille est disposée à l'intérieur du projecteur de façon à recevoir une partie significative des signaux lumineux produits par la source lumineuse uniquement lorsqu'un filtre de lumière non visible est en position active, c'est à dire lorsque ce filtre ne laisse plus passer les signaux lumineux qui sont produits par la source lumineuse 201 et qui ont une longueur d'onde dans le domaine du visible. La présence de la lentille provoque une modification des trajectoires des signaux lumineux, et change en conséquence la dispersion du faisceau lumineux. La dispersion d'un faisceau lumineux désigne la direction des rayons lumineux définissant le contour, l'enveloppe, du faisceau lumineux. Les caractéristiques physiques de la lentille sont déterminées en fonction des modifications des trajectoires des faisceaux lumineux qui sont souhaitées.

L'invention concerne donc essentiellement un dispositif projecteur, présentant de préférence au moins une fonctionnalité dans le visible et au moins une fonctionnalité hors domaine visible, pour véhicule automobile, comportant au moins :
- une source lumineuse émettant des signaux lumineux vers une surface de sortie du projecteur pour produire un faisceau lumineux ;
- un moyen de filtrage pouvant évoluer entre une position passive dans laquelle il n'intercepte substantiellement pas les signaux lumineux émis par la dite source et une position active dans laquelle il intercepte la majorité, notamment l'essentiel, des signaux lumineux, ledit moyen de filtrage ne laissant passer qu'une partie des signaux lumineux correspondant à des longueurs d'onde non visibles ;
caractérisé en ce que le moyen de filtrage est utilisé en association avec, ou fait partie de, une lentille intermédiaire pour modifier la dispersion du faisceau lumineux et en ce que la lentille intermédiaire est solidaire du moyen de filtrage.

On entend au sens de l'invention par le fait que le moyen de filtrage intercepte "les signaux lumineux" émis par la source lumineuse les signaux émis directement par ladite source vers le moyen de filtrage, mais aussi éventuellement les faisceaux émis par la source puis déviés ou réfléchis, notamment par un réflecteur, avant d'atteindre indirectement le moyen de filtrage.

Dans un mode de réalisation particulier, la source lumineuse produit un faisceau lumineux de type route et/ou longue portée, et/ou l'utilisation du moyen de filtrage en association avec la lentille intermédiaire est mise en oeuvre de façon automatique dès que les feux de croisement du véhicule sont déclenchés.

Le dispositif selon l'invention peut en outre présenter une ou plusieurs des caractéristiques suivantes :
- le dispositif projecteur comprend une seconde source lumineuse apte à générer un faisceau lumineux de type feux de croisement, feux de position diurne, feux anti brouillard.
- la lentille intermédiaire est disposée de telle sorte qu'elle reçoit tout ou partie, notamment la totalité ou la quasi totalité, des signaux lumineux qui traversent le moyen de filtrage ou qui ont été filtrés par ce dernier.
- la structure et la disposition de la lentille intermédiaire permettent d'obtenir un élargissement, ou un rétrécissement, du faisceau lumineux, par exemple selon une direction horizontale.
- la lentille intermédiaire est disposée entre la source lumineuse et le moyen de filtrage.
- la lentille intermédiaire est disposée entre le moyen de filtrage et la surface de sortie.
- la lentille intermédiaire est frénélisée ou est réalisée par une pluralité de lentilles cylindriques verticales continues de type stries.
- la source lumineuse est une lampe halogène ou une lampe à décharge.
- les longueurs d'onde non visibles que le moyen de filtrage laisse passer appartiennent au moins en partie au domaine de l'infra-rouge, et de préférence du proche infra-rouge, ou de l'ultra-violet, et de préférence du proche ultra-violet.
- la lentille intermédiaire est convergente ou divergente.
- la lentille intermédiaire agit optiquement avec une deuxième lentille, dite lentille de sortie, pour obtenir un élargissement du faisceau lumineux.
- la lentille de sortie, qui peut être montée de façon fixe dans le dispositif projecteur, est disposée de façon à intercepter les signaux lumineux filtrés par le moyen de filtrage.
- le dispositif projecteur coopère avec une caméra infra-rouge et un dispositif de reproduction de l'image filmée par la caméra sur un écran d'affichage pour une vision nocturne améliorée dans un véhicule automobile.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, le dispositif projecteur selon l'invention est illustré dans le cas d'une utilisation dans un feu de route, mais ce dispositif convient pour tout dispositif projecteur d'un véhicule. Les figures montrent :
- à la figure 1, déjà décrite, une représentation schématique de la face avant d'un véhicule susceptible de recevoir un dispositif projecteur selon l'invention ;
- à la figure 2, déjà décrite, un exemple de feu de route amélioré de l'état de la technique ;
- à la figure 3, un exemple de réalisation du dispositif selon l'invention dans un feu de route en vue de dessus;
- à la figure 4, une illustration de lentille frénélisée.

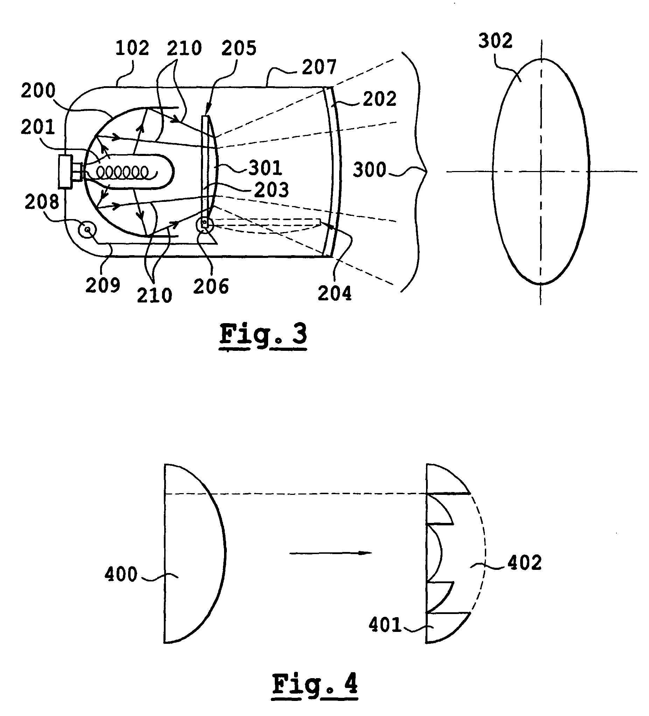

A la figure 3, on retrouve l'ensemble des éléments déjà présents sur la figure 2. Les éléments communs à différentes figures ont conservé les mêmes références. Selon l'invention, le dispositif projecteur de la figure 3 comporte une lentille intermédiaire 301 disposée de façon amovible sur la trajectoire d'au moins une partie des signaux lumineux 210. La présence de la lentille intermédiaire permet au conducteur de disposer de deux faisceaux lumineux distincts 211 et 300. Le premier faisceau lumineux 211 est celui qui est obtenu dans l'état de la technique en éclairage direct ou indirect, c'est à dire sans ou avec filtrage des signaux lumineux 210 au moyen du filtre 203. Le deuxième faisceau lumineux 300 est, de préférence, obtenu seulement en éclairage indirect : il est disponible lorsque la lentille intermédiaire 301 et le moyen de filtrage 203 sont dans une position active, c'est à dire dans la position où d'une part seuls les signaux lumineux non visibles passent à travers le filtre 203, et où d'autre part une partie de ces signaux sont déviés par la lentille intermédiaire 301.

La lentille intermédiaire 301 et le moyen de filtrage 203 interviennent donc simultanément sur les signaux lumineux 210 : dans le cas des feux de route 102, lorsque le conducteur passe en feux de croisement 101, le moyen de filtrage 203 et la lentille intermédiaire 301 viennent automatiquement se placer sur la trajectoire des signaux lumineux 210 pour en dévier au moins une partie, éventuellement la totalité, et modifier ainsi la dispersion du faisceau lumineux en sortie de chaque feu de route 102. Le conducteur obtient ainsi sur son écran 105 une image, en éclairage indirect, d'une étendue différente de celle qu'il pouvait voir en lumière directe sans l'intermédiaire de l'écran.

Si sur la figure 3, donnée à titre d'exemple, la lentille intermédiaire 301 est assujettie au moyen de filtrage 203, elle peut être, dans d'autres modes de réalisation du dispositif selon l'invention, disposée à d'autres endroits au sein du projecteur. Les différentes possibilités d'emplacement de la lentille intermédiaire peuvent notamment être des positions intermédiaires entre la source de lumière 201 et le moyen de filtrage 203, ou entre le moyen de filtrage 203 et la surface de sortie 202. Le fait de solidariser la lentille intermédiaire 301 sur l'une des faces du moyen de filtrage 203 permet d'éviter l'ajout d'un mécanisme supplémentaire pour rendre la lentille intermédiaire amovible 301. La solidarisation de la lentille intermédiaire peut être effectuée sur le moyen de filtrage 203 par collage, avec une colle résistant à la chaleur, ou par tout autre moyen, notamment mécanique ; de préférence, le montage est tel que le moyen de filtrage 203 et la lentille intermédiaire 301 sont accolés tout en pouvant être désolidarisés l'un de l'autre de façon à pouvoir procéder au remplacement de seulement l'une de ces deux pièces. La lentille intermédiaire 301 peut être éventuellement directement fabriquée dans le même matériau que celui qui constitue le moyen de filtrage de façon à ne former avec ce dernier qu'une unique pièce.

Afin de limiter le poids de la lentille intermédiaire 301, et ainsi de rendre moins lourd l'ensemble constitué par le moyen de filtrage et la lentille intermédiaire, il est prévu, dans le dispositif selon l'invention, la possibilité d'utiliser des lentilles frénélisées. De telles lentilles sont illustrées à la figure 4 où une lentille cylindrique est représentée dans sa structure classique 400, et sous sa forme frénélisée 401. La différence entre ces deux structures est la suppression d'un volume 402 dans la lentille frénélisée, ce volume 402 n'ayant aucune propriété optique. Dans la lentille frénélisée, on conserve l'ensemble des courbures de la lentille, elles seules présentant un réel intérêt en terme de propriétés optiques.

La position, les caractéristiques structurelles et les propriétés physiques de la lentille intermédiaire au sein du dispositif projecteur selon l'invention sont choisies de telle sorte qu'au moins une partie des signaux lumineux qui traversent la lentille intermédiaire 301 soient déviés pour modifier la dispersion du faisceau lumineux 211 présent dans l'état de la technique et ainsi obtenir un faisceau lumineux 300 différent. On pourra par exemple choisir des lentilles cylindriques, convergentes ou divergentes en fonction de la position qui leur est attribuée au sein du dispositif projecteur.

Dans le cas où la surface de sortie 202 est constituée par une lentille de sortie du dispositif projecteur, autrement dit dans le cas où la surface de sortie présente des propriétés optiques, la position de la lentille intermédiaire est adaptée pour que la combinaison des deux lentilles produise la modification du faisceau lumineux 300 attendue. On pourra notamment mettre en place les variantes suivantes de réalisation du dispositif selon l'invention, avec, en suivant le parcours des rayons lumineux dans la direction d'émission du faisceau sortant du dispositif, soit:
- la lentille intermédiaire mobile, puis le moyen de filtrage mobile, puis la lentille de sortie fixe (la lentille de sortie peut faire partie de la surface de sortie du projecteur, comme déjà mentionné, ou être montée de façon fixe "avant "cette surface de sortie, à l'intérieur du boîtier 207, de façon à être apte à intercepter les rayons filtrés par le moyen de filtrage);
- le moyen de filtrage mobile, puis la lentille intermédiaire mobile, puis la lentille de sortie fixe (elle peut aire partie de la surface de sortie ou non, comme dans la variante précédente);
- le moyen de filtrage mobile, puis la lentille de sortie fixe, puis la lentille intermédiaire mobile; dans ce dernier cas, notamment, la lentille de sortie ne correspond pas à la surface de sortie 202, et elle est disposée à l'intérieur du boîtier 207.

Dans l'exemple illustré, le faisceau lumineux 300 est élargi horizontalement par rapport au conducteur. En vue de dessus, comme c'est le cas à la figure 3, un tel faisceau projeté sur un mur donnerait approximativement une tâche lumineuse elliptique 302. Une telle modification est particulièrement intéressante pour le conducteur qui peut obtenir des informations visuelles en éclairage indirect qui ne lui étaient pas accessibles auparavant. Par ailleurs, un élargissement du faisceau lumineux 300 permet de diminuer l'intensité du faisceau lumineux en son centre; l'intensité étant mieux répartie, la caméra 104 utilisée sera en mesure de fournir une image de meilleure qualité en détaillant plus précisément les différentes nuances de gris visibles sur l'écran 105.

Selon différents exemples de réalisation, le dispositif selon l'invention peut être conçu avec un moyen de filtrage 203 infra-rouge, c'est à dire un filtre qui ne laisse passer que les signaux lumineux dont la fréquence appartient au spectre des signaux infra-rouge, et de préférence uniquement les fréquences du proche infra-rouge qui sont directement voisines du spectre de fréquence du visible, ou avec un filtre 203 ultra-violet, c'est à dire un filtre qui ne laisse passer que les signaux lumineux dont la fréquence appartient au spectre des signaux ultra-violet, et de préférence uniquement les fréquences du proche ultra-violet qui sont directement voisines du spectre de fréquence du visible. Dans le premier cas, on utilisera de préférence une source lumineuse 201 de type halogène, alors que dans le deuxième cas, on utilisera de préférence une source lumineuse de type lampe à décharge, dont une catégorie est connue sous la dénomination usuelle de lampe à xénon.

## Revendications

1. Dispositif projecteur, présentant de préférence au moins une fonctionnalité dans le visible et au moins une fonctionnalité hors domaine visible, pour véhicule automobile, comportant au moins :
- une source lumineuse (201) émettant des signaux lumineux (210) vers une surface de sortie (202) du projecteur pour produire un faisceau lumineux (300);
- un moyen de filtrage (203) pouvant évoluer entre une position passive (204) dans laquelle il n'intercepte substantiellement pas les signaux lumineux (210) émis par la dite source (201) et une position active (205) dans laquelle il intercepte la majorité, notamment l'essentiel, des signaux lumineux (210), ledit moyen de filtrage (203) ne laissant passer qu'une partie des signaux lumineux (210) correspondant à des longueurs d'onde non visibles;
**caractérisé en ce que** le moyen de filtrage (203) est utilisé en association avec, ou fait partie de, une lentille intermédiaire (301) pour modifier la dispersion du faisceau lumineux (300), et **en ce que** la lentille intermédiaire (301) est solidaire du moyen de filtrage (203)

2. Dispositif selon la revendication précédente **caractérisé en ce que** ladite source lumineuse (201) produit un faisceau lumineux (300) de type route et/ou longue portée.

3. Dispositif selon l'une des revendications précédentes **caractérisé en ce que** le dispositif projecteur comprend une seconde source lumineuse apte à générer un faisceau lumineux de type feux de croisement, feux de position diurne, feux anti brouillard.

4. Dispositif selon l'une au moins des revendications précédentes **caractérisé en ce que** l'utilisation des moyens de filtrage (203) en association avec la lentille intermédiaire (301) est mise en oeuvre de façon automatique dès que les feux de croisement (101) du véhicule sont déclenchés.

5. Dispositif selon l'une des revendications précédentes **caractérisé en ce que** la lentille intermédiaire (301) est disposée de telle sorte qu'elle reçoit tout ou partie des signaux lumineux (210) qui traversent le moyen de filtrage (203) ou qui ont été filtrés par ce dernier.

6. Dispositif selon l'une des revendications précédentes **caractérisé en ce que** la structure et la disposition de la lentille intermédiaire (301) permettent d'obtenir un élargissement du faisceau lumineux (300).

7. Dispositif selon la revendication précédente **caractérisé en ce que** l'élargissement du faisceau lumineux (300) est réalisé selon une direction horizontale.

8. Dispositif selon l'une des revendications précédentes **caractérisé en ce que** la lentille intermédiaire (301) est disposée entre la source lumineuse (201) et le moyen de filtrage (203).

9. Dispositif selon l'une des revendications 1 à 7 **caractérisé en ce que** la lentille intermédiaire (301) est disposée entre le moyen de filtrage (203) et la surface de sortie (202).

10. Dispositif selon l'une des revendications précédentes **caractérisé en ce que** la lentille intermédiaire (301)est frénélisée ou est réalisée par une pluralité de lentilles cylindriques verticales continues de type stries.

11. Dispositif selon l'une des revendications précédentes **caractérisé en ce que** la source lumineuse (201) est une lampe halogène.

12. Dispositif selon l'une des revendications 1 à 10 **caractérisé en ce que** la source lumineuse (201) est une lampe à décharge.

13. Dispositif selon l'une des revendications précédentes **caractérisé en ce que** les longueurs d'onde non visibles que le moyen de filtrage (203) laisse passer appartiennent au moins en partie au domaine de l'infra-rouge, et de préférence dans le proche infra-rouge.

14. Dispositif selon l'une des revendications 1 à 12 **caractérisé en ce que** les longueurs d'onde non visibles que le moyen de filtrage (203) laisse passer appartiennent au moins en partie au domaine de l'ultra-violet, et de préférence dans le proche l'ultra-violet.

15. Dispositif selon l'une des revendications précédentes **caractérisé en ce que** la lentille intermédiaire (301) est convergente ou divergente.

16. Dispositif selon l'une des revendications précédentes **caractérisé en ce que** la lentille intermédiaire (301) agit optiquement avec une deuxième lentille, dite lentille de sortie, pour obtenir un élargissement du faisceau lumineux (300).

17. Dispositif selon la revendication précédente **caractérisé en ce que** la lentille de sortie est disposée de façon à intercepter les signaux lumineux (210) filtrés par le moyen de filtrage (203).

18. Dispositif selon l'une des revendications 16 ou 17 **caractérisé en ce que** la lentille de sortie est montée de façon fixe dans le dispositif projecteur.

19. Dispositif selon l'une au moins des revendications 1 à 13 et 15 à 18 **caractérisé en ce qu'**il coopère avec une caméra infra-rouge (104) et un dispositif de reproduction de l'image filmée par la caméra (104) sur un écran d'affichage (105) pour une vision nocturne améliorée dans un véhicule automobile.

## Claims

1. Headlight device, which preferably has at least one functionality in the visible domain and at least one functionality outside the visible domain, for a motor vehicle, comprising at least:
- a source of light (201) which emits light signals (210) towards an output surface (202) of the headlight, in order to produce a light beam (300);
- a filtering means (203) which can develop between a passive position (204) in which it substantially does not intercept the light signals (210) emitted by the said source (201) and an active position (205) in which it intercepts most, and, in particular, the essential part of the light signals (210), the said filtering means (203) permitting passage of only part of the light signals (210) corresponding to non-visible wavelengths;
**characterised in that in that** the filtering means (203) is used in association with, or forms part of, an intermediate lens (301) in order to modify the dispersion of the light beam (300), and **in that** the intermediate lens (301) is integral with the filtering means (203).

2. Device according to the preceding claim, **characterised in that** the said source of light (201) produces a light beam (300) of the full-beam and/or long-distance type.

3. Device according to either of the preceding claims, **characterised in that** the headlight device comprises a second source of light which can generate a light beam of the dipped type, daytime position light type, or fog lamp type.

4. Device according to at least one of the preceding claims, **characterised in that** the use of the filtering means (203) in association with the intermediate lens (301) is implemented automatically as soon as the dipped headlights (101) of the vehicle are switched on.

5. Device according to one of the preceding claims, **characterised in that** the intermediate lens (301) is disposed such that it receives all or part of the light signals (210) which pass through the filtering means (203) or which have been filtered by the latter.

6. Device according to one of the preceding claims, **characterised in that** the structure and the arrangement of the intermediate lens (301) make it possible to obtain widening of the light beam (300).

7. Device according to the preceding claim, **characterised in that** the widening of the light beam (300) is carried out according to a horizontal direction.

8. Device according to one of the preceding claims, **characterised in that** the intermediate lens (301) is disposed between the source of light (201) and the filtering means (203).

9. Device according to one of claims 1 to 7, **characterised in that** the intermediate lens (301) is disposed between the filtering means (203) and the output surface (202).

10. Device according to one of the preceding claims, **characterised in that** the intermediate lens (301) is stepped as a Fresnel lens or is produced by a plurality of continuous vertical cylindrical lenses of the striated type.

11. Device according to one of the preceding claims, **characterised in that** the source of light (201) is a halogen lamp.

12. Device according to one of claims 1 to 10, **characterised in that** the source of light (201) is a discharge lamp.

13. Device according to one of the preceding claims, **characterised in that** the non-visible wavelengths which the filtering means (203) allows to pass belong at least partly to the infra-red domain, and preferably to the close infra-red domain.

14. Device according to one of claims 1 to 12, **characterised in that** the non-visible wavelengths which the filtering means (203) allows to pass belong at least partly to the ultra-violet domain, and preferably to the close ultra-violet domain.

15. Device according to one of the preceding claims, **characterised in that** the intermediate lens (301) is convergent or divergent.

16. Device according to one of the preceding claims, **characterised in that** the intermediate lens (301) acts optically with a second lens, known as the output lens, in order to obtain widening of the light beam (300).

17. Device according to the preceding claim, **characterised in that** the output lens is disposed such as to intercept the light signals (210) filtered by the filtering means (203).

18. Device according to one of claims 16 or 17, **characterised in that** the output lens is fitted in a fixed manner in the headlight device.

19. Device according to at least one of claims 1 to 13 and 15 to 18, **characterised in that** it co-operates with an infra-red camera (104) and a device for reproduction of the image filmed by the camera (104) on a display screen (105), for improved night-time vision in a motor vehicle.

## Patentansprüche

1. Scheinwerfervorrichtung für Kraftfahrzeuge, mit vorzugsweise mindestens einer Funktionalität im sichtbaren Bereich und mindestens einer Funktionalität im nicht sichtbaren Bereich, die wenigstens umfasst:
- eine Lichtquelle (201), die Lichtsignale (210) in Richtung einer Austrittsfläche (202) des Scheinwerfers zum Erzeugen eines Lichtbündels (300) aussendet;
- eine Filtereinrichtung (203), die zwischen einer passiven Stellung (204), in der sie im Wesentlichen keine von der Lichtquelle (201) ausgesandten Lichtsignale (210) abfängt, und einer aktiven Stellung (205), in der sie die Mehrzahl, insbesondere den Hauptteil der Lichtsignale (210) abfängt, wechseln kann, wobei die Filtereinrichtung (203) nur einen Teil der Lichtsignale (210) passieren lässt, die nicht sichtbaren Wellenlängen entsprechen;
**dadurch gekennzeichnet, dass** die Filtereinrichtung (203) in Verbindung mit einer Zwischenlinse (301) verwendet wird oder zu dieser gehört, um die Streuung des Lichtbündels (300) zu verändern, und dass die Zwischenlinse (301) mit der Filtereinrichtung (203) fest verbunden ist.

2. Vorrichtung nach dem vorhergehenden Anspruch,
**dadurch gekennzeichnet, dass** die Lichtquelle (201) ein Lichtbündel (300) vom Typ Fernlicht und/oder Weitstrahler erzeugt.

3. Vorrichtung nach einem der vorhergehenden Ansprüche,
**dadurch gekennzeichnet, dass** die Scheinwerfervorrichtung eine zweite Lichtquelle umfasst, die ein Lichtbündel vom Typ Abblendlicht, Tagfahrlicht, Nebellicht zu erzeugen vermag.

4. Vorrichtung nach wenigstens einem der vorhergehenden Ansprüche,
**dadurch gekennzeichnet, dass** die Verwendung der Filtereinrichtung (203) in Verbindung mit der Zwischenlinse (301) automatisch erfolgt, sobald das Abblendlicht (101) des Fahrzeugs eingeschaltet wird.

5. Vorrichtung nach einem der vorhergehenden Ansprüche,
**dadurch gekennzeichnet, dass** die Zwischenlinse (301) solchermaßen angeordnet ist, dass sie alle oder einen Teil der Lichtsignale (210) empfängt, die die Filtereinrichtung (203) durchqueren oder von letzterer gefiltert wurden.

6. Vorrichtung nach einem der vorhergehenden Ansprüche,
**dadurch gekennzeichnet, dass** die Struktur und die Anordnung der Zwischenlinse (301) es erlauben, eine Verbreiterung des Lichtbündels (300) zu erreichen.

7. Vorrichtung nach dem vorhergehenden Anspruch,
**dadurch gekennzeichnet, dass** die Verbreiterung des Lichtbündels (300) in einer horizontalen Richtung erfolgt.

8. Vorrichtung nach einem der vorhergehenden Ansprüche,
**dadurch gekennzeichnet, dass** die Zwischenlinse (301) zwischen der Lichtquelle (201) und der Filtereinrichtung (203) angeordnet ist.

9. Vorrichtung nach einem der Ansprüche 1 bis 7,
**dadurch gekennzeichnet, dass** die Zwischenlinse (301) zwischen der Filtereinrichtung (203) und der Austrittsfläche (202) angeordnet ist.

10. Vorrichtung nach einem der vorhergehenden Ansprüche,
**dadurch gekennzeichnet, dass** die Zwischenlinse (301) eine Fresnel-Linse ist oder durch eine Vielzahl kontinuierlicher, senkrechter, zylinderförmiger Linsen vom Typ Rippen ausgeführt ist.

11. Vorrichtung nach einem der vorhergehenden Ansprüche,
**dadurch gekennzeichnet, dass** die Lichtquelle (201) eine Halogenlampe ist.

12. Vorrichtung nach einem der Ansprüche 1 bis 10,
**dadurch gekennzeichnet, dass** die Lichtquelle (201) eine Entladungslampe ist.

13. Vorrichtung nach einem der vorhergehenden Ansprüche,
**dadurch gekennzeichnet, dass** die nicht sichtbaren Wellenlängen, die die Fitereinrichtung (203) passieren lässt, wenigstens zum Teil dem Infrarotbereich angehören, und vorzugsweise dem nahen Infrarot.

14. Vorrichtung nach einem der Ansprüche 1 bis 12,
**dadurch gekennzeichnet, dass** die nicht sichtbaren Wellenlängen, die die Filtereinrichtung (203) passieren lässt, wenigstens zum Teil dem Ultraviolettbereich angehören, und vorzugsweise dem nahen Ultraviolett.

15. Vorrichtung nach einem der vorhergehenden Ansprüche,
**dadurch gekennzeichnet, dass** die Zwischenlinse (301) sammelnd oder streuend ist.

16. Vorrichtung nach einem der vorhergehenden Ansprüche,
**dadurch gekennzeichnet, dass** die Zwischenlinse (301) optisch mit einer zweiten als Austrittslinse bezeichneten Linse zusammenwirkt, um eine Verbreiterung des Lichtbündels (300) zu erreichen.

17. Vorrichtung nach dem vorhergehenden Anspruch,
**dadurch gekennzeichnet, dass** die Austrittslinse solchermaßen angeordnet ist, dass die von der Filtereinrichtung (203) gefilterten Lichtsignale (210) abgefangen werden.

18. Vorrichtung nach einem der Ansprüche 16 oder 17,
**dadurch gekennzeichnet, dass** die Austrittslinse feststehend in der Scheinwerfervorrichtung montiert ist.

19. Vorrichtung nach wenigstens einem der Ansprüche 1 bis 13 und 15 bis 18,
**dadurch gekennzeichnet, dass** sie für eine bessere Nachtsicht in einem Kraftfahrzeug mit einer Infrarotkamera (104) und einer Vorrichtung zur Wiedergabe des von der Kamera (104) aufgenommenen Bildes auf einem Display (105) zusammenwirkt.
